# EUROPÄISCHE PATENTANMELDUNG

(11) **EP 1 246 033 A1**
(43) Veröffentlichungstag der Anmeldung: **02.10.2002**
(21) Anmeldenummer: 01120256.1
(22) Anmeldetag: 23.08.2001
(51) Int. Cl.: G05B 19/042, G05B 19/05

(54) **Verfahren zur Überwachung konsistenter Speicherinhalte in redundanten Systemen**

(71) Anmelder: SIEMENS AKTIENGESELLSCHAFT, 80333 München (DE)
(72) Erfinder: Peleska, Pavel, 82166 Gräfelfing (DE)

(57) **Zusammenfassung**

In einem fehlertoleranten System, das aus zwei identischen Steuerungseinrichtungen (SE₀, SE₁) aufgebaut ist, die im lockstep Betrieb arbeiten, d.h. beide Steuerungseinrichtungen verrichten zu jedem beliebigen Zeitpunkt die gleiche Arbeit, besteht die Notwendigkeit zu prüfen, ob konsistente, d.h. identische, Inhalte zum gleichen Zeitpunkt aus dem Hauptspeicher gelesen oder in diesen geschrieben werden, um gegebenenfalls auftretende Fehler möglichst schnell erkennen zu können und so eine Verschleppung des Fehlers zu verhindern. Bekannte Verfahren leisten dies mithilfe dedizierter North-Bridges, die über eine gesonderte Schnittstelle Informationen bereitstellt, oder durch eine Überwachung anderer Vorgänge, beispielsweise I/O-Transaktionen etwa am PCI-Bus. Erfindungsgemäß erfolgt die Überprüfung der Speicherinhalte auf Konsistenz mit Hilfe einfacher Einrichtungen - Speicherüberwachungsmodul, Überprüfungseinrichtung - und wird durch die Überprüfungseinrichtung gesteuert.

## Beschreibung

Verfahren zur Überwachung konsistenter Speicherinhalte in redundanten Systemen

In einem fehlertoleranten System, das aus zwei identischen Steuerungseinrichtungen aufgebaut ist, die im lockstep Betrieb arbeiten, d.h. beide Steuerungseinrichtungen verrichten zu jedem beliebigen Zeitpunkt die gleiche Arbeit, besteht die Notwendigkeit zu prüfen, ob konsistente, d.h. identische, Inhalte zum gleichen Zeitpunkt aus dem Hauptspeicher gelesen oder in diesen geschrieben werden, um gegebenenfalls auftretende Fehler möglichst schnell erkennen zu können und so eine Verschleppung des Fehlers zu verhindern.

Bekannte Verfahren zur Prüfung auf konsistente Speicherinhalte lassen sich in direkte und indirekte Verfahren einteilen.

Bei dem bekannten direkten Verfahren handelt es sich um ein hardwarebasiertes Verfahren, bei dem eine dedizierte North-Bridge verwendet wird, die über eine gesonderte Schnittstelle Informationen über Transaktionen, an denen die Northbridge beteiligt ist, also auch über Speichertransaktionen, bereitstellt.

Bei dem bekannten direkten Verfahren treten folgende Probleme auf:
- Der Entwicklungsaufwand für eine dafür erforderliche dedizierte North-Bridge ist erheblich.
- Im Fall einer zur Steigerung der Leistungsfähigkeit in die CPU integrierten North-Bridge ist der Einsatz einer dedizierten North-Bridge nicht möglich.

Bei dem bekannten indirekten Verfahren handelt es sich um ein Verfahren, bei dem anstelle der Speichertransaktionen, die mangels direkter Zugriffsmöglichkeiten auf die North-Bridge und deren Schnittstellen nicht unmittelbar überwacht werden können, beispielsweise I/O-Transaktionen etwa am PCI-Bus überwacht werden. Durch diese indirekte Überwachung entsteht allerdings das Problem, daß Fehler bzw. asynchrone Arbeitsweisen erst wesentlich später erkannt werden können als dies bei direkter Überwachung der Speichertransaktionen möglich ist.

Die der vorliegenden Erfindung zugrundeliegende Aufgabe besteht darin, die bekannten Verfahren zur Überwachung konsistenter Speicherinhalte in redundanten Systemen zu verbessern.

Diese Aufgabe wird durch die Merkmale des Patentanspruchs 1 gelöst.

Ein wesentlicher Vorteil des erfindungsgemäßen Verfahrens besteht darin, daß eine direkte, unmittelbare Überprüfung der Speicherinhalte auf Konsistenz mit Hilfe einfacher Einrichtungen - Speicherüberwachungsmodul, Überprüfungseinrichtung - erfolgt und durch die Überprüfungseinrichtung gesteuert wird. Es ist daher keine speziell angefertigte North-Bridge für das Abgreifen der Speicherinhalte erforderlich. Darüberhinaus sorgt die Steuerung des Verfahrens durch die Überprüfungseinrichtung dafür, daß die Überprüfung ohne I/O-Zugriffe auf periphere Bausteine, beispielsweise über das PCI Bussystem, erfolgt.

Vorteilhaft werden durch die Speicherüberwachungsmodule eine geringe Zahl von stets zugänglichen, externen Signalen - Error Checking Code Signale der Speicherschnittstelle - an den North Bridges abgetastet. Dies erlaubt eine wesentlich vereinfachte Ausführung gegenüber dem Abtasten aller Datensignale und/oder Adreßsignale der Speicherschnittstelle, gewährleistet aber dennoch eine hohe Fehlererkennungsleistung. Durch die Verwendung externer Signale der North Bridges ist das Verfahren auch anwendbar, falls CPU und North Bridge in einem einzigen Baustein zusammengefaßt werden.

Da sich die Aufgabe der Überprüfungseinrichtung auf den Vergleich zweier Signaturen, die Steuerung des Speicherüberwachungsmoduls und ggf. die Auslösung einer Alarmierung beschränkt, ist die in der Überprüfungseinrichtung zu implementierende Logik einfach. Trotzdem wird aufgrund der Verwendung von Signaturen, die auf den ECC Informationen beruhen, eine sehr hohe Sicherheit bei der Erkennung von Fehlern gewährleistet, die mit der Leistung der Fehlererkennung auf der Speicherschnittstelle durch die ECC Information vergleichbar ist.

Weitere vorteilhafte Ausgestaltungen der Erfindung sind den Unteransprüchen zu entnehmen.

Im folgenden wird das erfindungsgemäße Verfahren anhand einer Zeichnung näher erläutert.

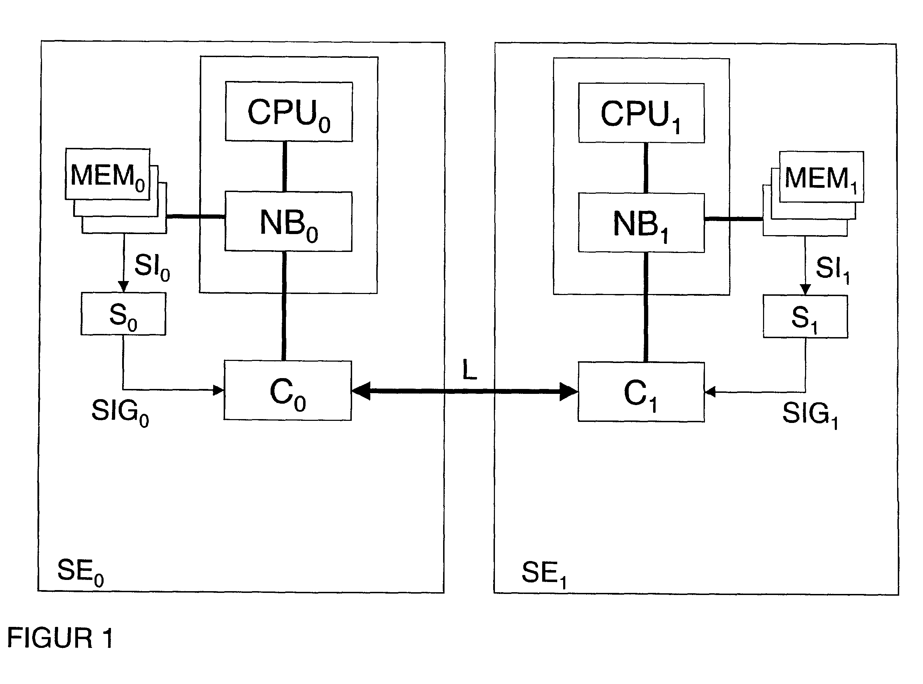

Die Figur zeigt eine erste Steuerungseinheit SE₀ und eine zweite Steuerungseinheit SE₁ eines fehlertoleranten Systems. Beide Steuerungseinheiten SE₀, SE₁ sind identisch aufgebaut und bestehen aus je einer Verarbeitungseinheit CPU₀, CPU₁, je einer Schnittstelleneinheit bzw. North-Bridge NB₀, NB₁ und je einem Speicher MEM₀, MEM₁, beispielsweise ausgeführt als SDRAM, DDR-SDRAM oder QDR-SDRAM. Die Funktionalität der Verarbeitungseinheiten CPU₀, CPU₁ und der North-Bridges NB₀, NB₁ kann, wie dargestellt, in je zwei separaten Einrichtungen ausgeführt sein oder in je einer einzigen Einrichtung zusammengefaßt werden - nicht dargestellt.

Weiterhin zeigt die Figur für die beiden Steuerungseinrichtungen SE₀, SE₁ je eine erfindungsgemäße Überprüfungseinrichtung C₀, C₁ mit je einem Speicherüberwachungsmodul bzw. Snooper S₀, S₁.

Bei diesen Überprüfungseinrichtungen C₀, C₁ handelt es sich vorzugsweise um je ein Field Programmable Gate Array FPGA oder um je einen Application Specific Integrated Circuit ASIC. Es ist jedoch auch möglich, die Funktion der Überprüfungseinrichtungen C₀, C₁ programmgesteuert mittels je eines Mikrocontrollers zu realisieren.

Die beiden Steuerungseinrichtungen SE₀, SE₁ arbeiten im lockstep Betrieb, d.h. beide Steuerungseinrichtungen SE₀, SE₁ und jede der vorgenannten den Steuerungseinrichtungen SE₀, SE₁ zugeordnete Einrichtung verrichten zu jedem beliebigen Zeitpunkt die gleiche Arbeit. Die Verfahren und Einrichtungen zum Herstellen und Überwachen des lockstep Betriebs sind nicht Gegenstand der vorliegenden Erfindung und werden nicht erläutert. Im folgenden wird jedoch vorausgesetzt, daß die Zeitsynchronität der Steuerungseinrichtungen SE₀, SE₁ gegeben ist.

Der erste Snooper S₀ der ersten Steuerungseinrichtung SE₀ beobachtet die Zugriffe der ersten North-Bridge NB₀ der ersten Steuerungseinrichtung SE₀ auf den ersten Speicher MEM₀ der ersten Steuerungseinrichtung SE₀. Hierfür ist der erste Snooper S₀ an die Steuerleitungen und wenigstens an die ECC Leitungen - Error Checking Code - des ersten Speicherinterfaces SI₀ der ersten Steuerungseinrichtung SE₀ angeschlossen.

In gleicher Weise ist der zweite Snooper S₁ der zweiten Steuerungseinrichtung SE₁ an die Steuerleitungen und wenigstens an die ECC Leitungen des zweiten Speicherinterfaces SI₁ der zweiten Steuerungseinrichtung SE₁ angeschlossen, und beobachtet die Zugriffe der zweiten North-Bridge NB₁ der zweiten Steuerungseinrichtung SE₁ auf den zweiten Speicher MEM₁ der zweiten Steuerungseinrichtung SE₁.

Da beide Snooper S₀, S₁ das Speicheransteuerungsprotokoll kennen und anhand der Steuersignale, die über die Steuerleitungen der jeweiligen Speicherschnittstelle SI₀, SI₁ übertragen werden, alle Abläufe überwachen, können die Snooper S₀, S₁ zum richtigen Zeitpunkt eine gültige ECC Information an der jeweiligen Speicherschnittstelle SI₀, SI₁ abtasten.

Diese ECC Information wird durch die Snooper S₀, S₁ komplett oder teilweise an die jeweilige Überprüfungseinrichtung C₀, C₁ in Form von Signaturen SIG₀, SIG₁ übertragen, d.h. die Signatur SIG₀ von Snooper S₀ wird an Überprüfungseinrichtung C₀ übertragen und die Signatur SIG₁ von Snooper S₁ wird an Überprüfungseinrichtung C₁ übertragen. Die Signaturen SIG₀, SIG₁ werden dann durch die Überprüfungseinrichtungen C₀, C₁ über den Link L an die jeweils andere Überprüfungseinrichtung C₀, C₁ übertragen, so daß in beiden Überprüfungseinrichtungen C₀, C₁ die Signaturen SIG₀, SIG₁ beider Snooper S₀, S₁ vorliegen.

Anschließend werden durch die Überprüfungseinrichtungen C₀, C₁ die Signaturen SIG₀, SIG₁ vom zugeordneten Snooper S₀, S₁ der eigenen Steuerungseinrichtung SE₀, SE₁ empfangene und die von der anderen Überprüfungseinrichtung C₀, C₁ empfangene Signatur SIG₀, SIG₁ auf Gleichheit überprüft, d.h. Überprüfungseinrichtung C₀ vergleicht die von Snooper S₀ erhaltene Signatur SIG₀ mit der von Überprüfungseinrichtung C₁ empfangenen Signatur SIG₁, und Überprüfungseinrichtung C₁ vergleicht die von Snooper S₁ erhaltene Signatur SIG₁ mit der von Überprüfungseinrichtung C₀ empfangenen Signatur SIG₀.

Wird eine Ungleichheit festgestellt, erfolgt eine Alarmierung, daß unterschiedliche Speichertransaktionen stattgefunden haben. Diese Alarmierung wird beispielsweise über die Verbindung zwischen den Überprüfungseinrichtungen C₀, C₁ und den zugehörigen North Bridges NB₀, NB₁ an die zugehörigen North Bridges NB₀, NB₁, und von dort an die Verarbeitungseinheiten CPU₀, CPU₁ weitergeleitet und kann in Form eines Interrupts angemessener Priorität im Zusammenhang mit einer entsprechenden Interrupt-Behandlungsroutine erfolgen. Bei der Verbindung zwischen den Überprüfungseinrichtungen C₀, C₁ und den zugehörigen North Bridges NB₀, NB₁ handelt es sich um eine Verbindung mittels einer Standardschnittstelle, beispielsweise PCI Bus oder AGP Bus.

Eine solche Alarmierung kann eine Indikation für eine Asynchronität der Steuerungseinrichtungen SE₀, SE₁ oder eine Indikation für einen Verarbeitungsfehler in mindestens einer der Steuerungseinrichtungen SE₀, SE₁ oder eine Indikation für einen Speicherfehler in mindestens einer der Steuerungseinrichtungen SE₀, SE₁ sein. Verfahren zur Isolierung und Behandlung eines zur Alarmierung führenden Fehlers in der Interrupt-Behandlungsroutine sind hinreichend bekannt und nicht Gegenstand dieser Erfindung.

Die ECC Information und damit die aus der ECC Information gebildeten Signaturen SIG₀, SIG₁ hängen von allen gelesenen bzw. geschriebenen Datenbits ab, so daß die ECC Information bzw. die Signaturen SIG₀, SIG₁ ausreichen, um mit hoher Wahrscheinlichkeit unterscheiden zu können, ob gleiche oder ungleiche Daten gelesen bzw. geschrieben wurden.

Ein besonderer Vorteil besteht darin, daß es insbesondere nicht erforderlich ist, die Snooper S₀, S₁ an alle Datenleitungen anzuschließen und diese zu bewerten. Die Anzahl der Datenleitungen gebräuchlicher Systeme ist ein ganzzahliges Vielfaches von 64, beispielsweise also 128 Datenleitungen, wohingegen nur 8 ECC Leitungen vorhanden sind, wodurch ein einfacherer Aufbau sowohl der Snooper S₀, S₁ als auch der Überprüfungseinrichtungen C₀, C₁ möglich ist.

Falls in die Bildung der ECC Information und damit in die Signaturen SIG₀, SIG₁ die Adresse des Speicherzugriffs eingeht, werden dadurch auch mittelbar die Adressen der Speicherzugriffe überwacht.

Die Erfindung ist nicht auf das Ausführungsbeispiel beschränkt. Beispielsweise kann, falls Überprüfungseinrichtungen C₀, C₁ und/oder der Link L weniger leistungsfähig ausgelegt werden sollen, die Steuerung der Snooper S₀, S₁ so erfolgen, daß nicht jede abgetastete ECC Information für die Überprüfung ausgewählt und als Signatur SIG₀, SIG₁ an die Überprüfungseinrichtungen C₀, C₁ weitergeleitet wird, sondern jede n-te abgetastete ECC Information, beispielsweise nur jede zweite oder jede zehnte abgetastete ECC Information. Zwar sinkt dadurch die Fähigkeit des Verfahrens, abweichende ECC Informationen und damit abweichende Speicherinhalte sofort zu erkennen und zu behandeln, gleichzeitig sinken jedoch auch die Anforderungen an die Leistungsfähigkeit der Überprüfungseinrichtungen C₀, C₁ und des Links L. Je nach Anwendungsfall läßt sich der Parameter n den Erfordernissen anpassen, wobei im Fall n=1 jede abgetastete ECC Information überprüft wird, wie im bevorzugten Ausführungsbeispiel beschrieben.

Falls in die Bildung der ECC Information und damit in die Signaturen SIG₀, SIG₁ die Adresse des Speicherzugriffs nicht eingeht, können Snooper S₀, S₁ vorgesehen werden, die zusätzlich an alle oder ausgewählte Adreßleitungen angeschlossen sind. Dadurch kann eine Überwachung auch der Adressen der Speicherzugriffe erfolgen.

Schließlich kann das erfindungsgemäße Verfahren auch dann verwendet werden, wenn der Speicher MEM₀, MEM₁ und/oder die North Bridges NB₀, NB₁ keine ECC Informationen auf dem Speicherinterface SI₀, SI₁ liefern. Dann können Snooper S₀, S₁ vorgesehen werden, die an alle Datenleitungen des Speicherinterfaces SI₀,SI₁ angeschlossen sind und aus diesen Signalen eine Signatur SIG₀, SIG₁ berechnen. Dies hat unter anderem den Vorteil, daß gegenüber Speicherinterfaces SI₀, SI₁ mit ECC Informationen lediglich ein anderer Snooper S₀, S₁, jedoch keine andere Überwachungseinrichtung C₀, C₁ vorgesehen werden muß.

## Patentansprüche

1. Verfahren zum Überwachen konsistenter Speicherinhalte in einem redundanten System bestehend aus einer ersten Steuerungseinheit (SE₀) und einer identischen zweiten Steuerungseinheit (SE₁) mit je einer Verarbeitungseinheit (CPU₀, CPU₁) mit integrierter oder separater Schnittstelleneinheit (NB₀, NB₁) und je einem Speicher (MEM₀, MEM₁),
- demgemäß die Speicher (MEM₀, MEM₁) der Steuerungseinheiten (SE₀, SE₁) durch je ein Speicherüberwachungsmodul (S₀, S₁) überwacht werden,
- demgemäß Signaturen (SIG₀, SIG₁) durch die Speicherüberwachungsmodule (S₀, S₁) gebildet werden, die in die Speicher (MEM₀, MEM₁) geschriebene oder aus den Speichern (MEM₀, MEM₁) gelesene Informationen repräsentieren, und die an je eine Überwachungseinrichtung (C₀, C₁) weiterleitet werden,
- demgemäß die Signaturen (SIG₀, SIG₁) durch die Überwachungseinrichtungen (C₀, C₁) an die jeweils andere Überwachungseinrichtung (C₀, C₁) über eine Verbindung (L) zwischen den Steuerungseinheiten (SE₀, SE₁) weitergeleitet werden,
- demgemäß mindestens eine der Überwachungseinrichtungen (C₀, C₁) die vom zugeordneten Speicherüberwachungsmodul (S₀, S₁) empfangene Signatur (SIG₀, SIG₁) mit der von der anderen Überwachungseinrichtung (C₀, C₁) empfangenen Signatur (SIG₀, SIG₁) vergleicht,
- demgemäß durch die den Vergleich ausführende Überwachungseinrichtung (C₀, C₁) bzw. die den Vergleich ausführenden Überwachungseinrichtungen (C₀, C₁) eine Alarmierung veranlaßt wird, falls die verglichenen Signaturen (SIG₀, SIG₁) als nicht übereinstimmend festgestellt werden.

2. Verfahren nach Anspruch 1,
**dadurch gekennzeichnet,**
**daß** Signaturen (SIG₀, SIG₁) aus den bei jedem schreibenden und/oder lesenden Zugriff auf die Speicher (MEM₀, MEM₁) gebildeten ECC Informationen - Error Checking Code - gebildet werden.

3. Verfahren nach einem der Ansprüche 1 bis 2,
**dadurch gekennzeichnet,**
- **daß** für die Überprüfungseinrichtungen (C₀, C₁) je ein FPGA - field programmable gate array - oder je ein ASIC - application specific integrated circuit - oder je ein Mikrocontroller vorgesehen werden,
- **daß** für das Auslösen der Alarmierung durch eine oder beide Überprüfungseinrichtungen (C₀, C₁) ein Anschluß der Überprüfungseinrichtungen (C₀, C₁) an die die Speicherschnittstelle (SI₀, SI₁) enthaltende Schnittstelleneinheit (NB₀, NB₁) bzw. an die Verarbeitungseinheit (CPU₀, CPU₁) mit integrierter Schnittstelleneinheit (NB₀, NB₁) mittels des PCI Bussystems oder mittels des AGP Bussystems oder mittels eines anderen Standardbussystems ausgeführt wird.

4. Anordnung zum Überwachen konsistenter Speicherinhalte in einem redundanten System bestehend aus einer ersten Steuerungseinheit (SE₀) und einer identischen zweiten Steuerungseinheit (SE₁)
- mit je einer Verarbeitungseinheit (CPU₀, CPU₁) mit integrierter oder separater Schnittstelleneinheit (NB₀, NB₁) und je einem Speicher (MEM₀, MEM₁),
- mit je einem Speicherüberwachungsmodul (S₀, S₁) zur Überwachung der Speichers (MEM₀, MEM₁), welches Signaturen (SIG₀, SIG₁), die in die Speicher (MEM₀, MEM₁) geschriebene oder aus den Speichern (MEM₀, MEM₁) gelesene Informationen repräsentieren, an je eine zugeordnete Überprüfungseinrichtung (C₀, C₁) weiterleitet,
- mit den Überprüfungseinrichtungen (C₀, C₁), welche Signaturen (SIG₀, SIG₁) sowohl von dem zugeordneten Speicherüberwachungsmodul (S₀, S₁) als auch von der jeweils anderen Überprüfungseinrichtungen (C₀, C₁) über eine Verbindung (L) empfangen und von denen wenigstens eine Überprüfungseinrichtung (C₀, C₁) die empfangenen Signaturen (SIG₀, SIG₁) vergleicht und bei Abweichungen eine Alarmierung veranlaßt.

5. Speicherüberwachungsmodul (S₀, S₁) mit Mitteln zur Überwachung der Speicherschnittstelle (SI₀, SI₁) eines Speichers (MEM₀, MEM₁) und Mitteln zur Bereitstellung einer Signatur (SIG₀, SIG₁), die aus an der Speicherschnittstelle (SI₀, SI₁) abgetasteten, bei jedem schreibenden und/oder lesenden Zugriff auf den Speicher (MEM₀, MEM₁) gebildeten ECC Informationen - Error Checking Code - abgeleitet wird.

6. Speicherüberwachungsmodul (S₀, S₁) nach Anspruch 5,
**dadurch gekennzeichnet**
**daß** das Speicherüberwachungsmodul (S₀, S₁) in die Bildung der Signaturen (SIG₀, SIG₁) allen oder ausgewählte Datenleitungen und/oder alle oder ausgewählte Adreßleitungen und/oder alle oder ausgewählte Steuerleitungen der Speicherschnittstelle (SI₀, SI₁) einbezieht.

7. Überprüfungseinrichtung (C₀, C₁) eines redundanten Systems
- mit Mitteln zum Empfang einer ersten Signatur (SIG₀, SIG₁), die ein in einen ersten Speicher (MEM₀, MEM₁) einer der Überprüfungseinrichtung zugeordneten ersten Steuerungseinrichtung (SE₀, SE₁) geschriebenes oder aus dem ersten Speicher (MEM₀, MEM₁) gelesenes Datenwort repräsentieren,
- mit Mitteln zum Empfang einer zweiten Signatur (SIG₀, SIG₁), die ein in einen zweiten Speicher (MEM₀, MEM₁) einer zweiten, redundanten Steuerungseinrichtung (SE₀, SE₁) geschriebenes oder aus dem zweiten Speicher (MEM₀, MEM₁) gelesenes Datenwort repräsentieren,
- mit Mitteln zum Vergleich der ersten und der zweiten Signatur (SIG₀, SIG₁),
- mit Mitteln zum Auslösen einer Alarmierung im Falle einer von der ersten abweichenden zweiten Signatur.

8. Überprüfungseinrichtung (C₀, C₁) nach Anspruch 7,
**dadurch gekennzeichnet,**
- **daß** die Überprüfungseinrichtung (C₀, C₁) ein FPGA - field programmable gate array - oder ein ASIC - application specific integrated circuit - oder ein Mikrocontroller ist,
- **daß** die Überprüfungseinrichtung (C₀, C₁) mittels des PCI Bussystems oder mittels des AGP Bussystems oder mittels einer anderen Standardschnittstelle an die die Speicherschnittstelle (SI₀, SI₁) enthaltende Schnittstelleneinheit (NB₀, NB₁) bzw. an die Verarbeitungseinheit (CPU₀, CPU₁) mit integrierter Schnittstelleneinheit (NB₀, NB₁) angeschlossen ist.

9. Überprüfungseinrichtung (C₀, C₁) nach einem der Ansprüche 8 oder 9,
**dadurch gekennzeichnet,**
**daß** die Überprüfungseinrichtung (C₀, C₁) zusätzlich ein Speicherüberwachungsmodul (S₀, S₁) mit Mitteln zur Überwachung der Speicherschnittstelle (SI₀, SI₁) des Speichers (MEM₀, MEM₁) und Mitteln zur Bereitstellung von Signaturen (SIG₀, SIG₁), die in den Speicher (MEM₀, MEM₁) geschriebene oder aus dem Speicher (MEM₀, MEM₁) gelesene Informationen repräsentieren, enthält.
